# EUROPÄISCHE PATENTANMELDUNG

(11) **EP 2 037 570 A2**
(43) Veröffentlichungstag der Anmeldung: **18.03.2009**
(21) Anmeldenummer: 08015078.2
(22) Anmeldetag: 27.08.2008
(51) Int. Cl.: H02P 7/292

(54) **Gebläse mit Stufenlos regelbarer Gasmenge sowie Verwendung eines solchen Gebläse**

(30) Priorität: 14.09.2007 DE 102007044073
(71) Anmelder: LANCO GmbH, 63452 Hanau (DE)
(72) Erfinder: Richter, Gerd, 65779 Kelkheim (DE); Jakob, Peter, 63500 Seligenstadt (DE)
(74) Vertreter: Grimm, Ekkehard

(57) **Zusammenfassung**

Die Erfindung betrifft ein Gebläse mit stufenlos regelbarer Gasmenge, mit einem Antriebsmotor in der Bauweise eines Reihenschlussmotors (Universaimotors), der über eine Phasenanschnittsteuerung (Leistungssteller) in der Drehzahl regelbar ist, wobei der Motor über ein Wechseistromnetz mit 50 Hz oder 60 Hz Frequenz betrieben wird, das dadurch gekennzeichnet ist, dass ein Microcontroller verwendet wird, der die Halbwellen der Wechselspannung zeitlich in gleiche Abschnitte unterteilt, die Nulldurchgänge der Polaritätswechsel der Wechselspannung erfasst und den jeweiligen Zündzeitpunkt der Phasenanschnittsteuerung für jede Halbwelle errechnet, dass das Ausgangssignal mit einer Diode vor der Phasenanschnittsteuerung oder mit einer Gleichrichterbrücke hinter der Phasenanschnittsteuerung so umgeformt wird, dass kein Polaritätswechsel der Spannung mehr auftritt, dass das gleichgerichtete Ausgangssignal der Phasenanschnittsteuerung dem Universalmotor zugeführt wird und dass die an den Schleifbürsten des Motor-Kollektors auftretenden Abschaltfunken aus der Gegeninduktivität des Motor-Ankers und der Motor-Wicklung mittels einer Diode mit Reaktionszeiten im Nanosekundenbereich gelöscht werden.

## Beschreibung

Die vorliegende Erfindung betrifft ein Gebläse mit stufenlos regelbarer Gasmenge, mit einem Antriebsmotor in der Bauweise eines Reihenschlussmotors (Universalmotors), der über eine Phasenanschnittsteuerung (Leistungssteller) in der Drehzahl regelbar ist, wobei der Motor über ein Wechselstromnetz mit 50 Hz oder 60 Hz Frequenz betrieben wird. Weiterhin betrifft die Erfindung die Verwendung eines solchen Gebläses.

Universalmotore, wie sie z. B. in Handwerkzeugmaschinen, Küchengeräten, Staubsaugern, usw., in großen Stückzahlen für meist nur geringe Einschaltdauer verwendet werden, erreichen im Dauerbetrieb wegen des starken Abbrandes von Schleifkohlen und Kollektor-Lamellen keine langen Standzeiten. Solche Maschinen und Geräte werden üblicherweise direkt an 230V AC betrieben, und wenn sie eine Verstellmöglichkeit der Drehzahl haben, wird diese durchweg mit einfachen Phasen-Anschnittsteuerungen mittels kapazitiver Verzögerung der Zündzeitpunkte vorgenommen. In jedem Fall entsteht dabei ein kräftiges Kollektor-Funkenbild, was auf starken Verschleiß an Bürsten und Kollektor-Lamellen hinweist (hierbei handelt es sich um eine Art selbstzerstörende Funken-Erodiermaschine).

Der vorliegenden Erfindung liegt die Aufgabe zugrunde, ein Gebläse mit Reihenschlussmotor (Universalmotor) zu schaffen, bei dem eine Drehzahlregelung praktisch vom Stillstand des Motors bis zur maximalen Drehzahl, d. h. in einem Bereich von 10 U/min bis jenseits 12.000 U/min, realisiert werden kann, und bei dem die Kollektor-Funkenbildung stark reduziert und weitgehend vermieden wird.

Gelöst wird diese Aufgabe durch ein Gebläse der eingangs genannten Art das dadurch gekennzeichnet ist, dass ein Microcontroller verwendet wird, der die Halbwellen der Wechselspannung zeitlich in gleiche Abschnitte unterteilt, die Nulldurchgänge der Polaritätswechsel der Wechselspannung erfasst und den jeweiligen Zündzeitpunkt der Phasenanschnittsteuerung für jede Halbwelle errechnet, dass das Ausgangssignal mit einer Diode vor der Phasenanschnittsteuerung oder mit einer Gleichrichterbrücke hinter der Phasenanschnittsteuerung so umgeformt wird, dass kein Polaritätswechsel der Spannung mehr auftritt, dass das gleichgerichtete Ausgangssignal der Phasenanschnittsteuerung dem Universalmotor zugeführt wird und dass die an den Schleifbürsten des Kollektors auftretenden Abschaltfunken aus der Gegeninduktivität des Motors mittels einer Diode mit Reaktionszeiten im Nanosekundenbereich gelöscht werden.

Die Motoren der Gebläse, wie sie vorstehend angegeben sind, werden somit nicht mehr mit Wechselstrom, sondern mit Gleichstrom, und zwar mit pulsierendem Gleichstrom, ohne Glättung durch Kondensatoren und nur Ober eine Diode oder Gleichrichterbrücke betrieben. Folglich werden die Motoren bei jeder Drehzahl nur mit gleichgerichteten, sinusförmigen Halbwellen oder Anschnitten von Halbwellen entsprechend der Netzfrequenz von 50 Hz oder 60 Hz betrieben.

Im Vorfeld haben die Erfinder umfangreiche Versuche durchgeführt, um bei reduzierten Drehzahlen einen Teillastbetrieb zu erreichen. Dazu wurden unter anderem herkömmliche Phasenanschnittschaltungen eingesetzt. Allerdings konnte damit keine gute Regelbarkeit erzielt werden. Es konnte beobachtet werden, dass besonders im langsamen Bereich, d. h. bei niedrigen Drehzahlen des Motors, die Funkenbildung am Kollektor des Motors die Thyristoren bzw. Triacs häufig durch Rückspannung fehlzünden lässt. Außerdem konnte beobachtet werden, dass bei Teillastbetrieb ein noch stärkerer Kohlen-Abbrand als bei voller Last auftritt. Für solchermaßen gesteuerte Motoren schien daher keine industrielle Anwendbarkeit im Dauerbetrieb möglich zu sein und auch die erforderliche Gewährleistungsdauer wäre kaum zu überschreiten gewesen.

Weitere Versuche haben gezeigt, dass sich Motoren mittels eines Regeltransforna-tors, der eine sinusförmige, stufenlos regelbare Spannung von 0 - 230 VAC abgibt, sehr gut und in einem weiten Regelbereich mit Wechselstrom betreiben lassen. Allerdings würde beispielsweise der Einsatz einer in Staubsaugern eingesetzten Turbine mit 1200 W maximaler Leistung einen Regel-Transformator mit 1200 VA Dauerleistung benötigen. Ein solcher Transformator hätte Kosten zur Folge, die ein Mehrfaches der Kosten des Motors betragen würden. Der Universalmotor lässt sich auch über eine Gieichrichterbrücke mit einem Regeltransformator betreiben, allerdings bliebe der Nachteil des hohen Preises für den Regeltransformator selbst und bei analoger Ansteuerung des Transformators auch noch der Preis für einen entsprechenden Servo-Antrieb zur Regelung des Transformators.

Dagegen wird mit dem erfindungsgemäßen Gebläse eine ebenso einfache wie Kosten sparende, stufenlose Motoransteuerung verbunden mit einer wirksamen Methode der Funken-Vermeidung erreicht, indem nämlich eine Schutzbeschaltung mit sehr schnellen und leistungsfähigen Dioden eingesetzt wird, die die Rückspannung der Abschaltfunken aus den Motorwicklungskreisen löschen.

Es kann darüber hinaus im Gleichstrombetrieb des Motors kombiniert mit einer Phasenanschnittsteuerung eine gut funktionierende Drehzahl-Regelung quasi vom Stillstand des Motors bis zur maximalen Drehzahl im Bereich von 10 U/min bis etwa 12.000 U/min realisiert werden, ohne dass hierzu beispielsweise aufwändige, schwere und verlustbehaftete Regeltransformatoren eingesetzt werden müssten.

In Verbindung mit dem erfindungsgemäßen Gebläse wird eine Phasenanschnittsteuerung eingesetzt, bei der der Zündzeitpunkt für jede Halbwelle der Wechselspannung zum Beispiel von einer schnellen PIC-Prozessorsteuerung bestimmt wird.

Vorzugsweise erfolgt die zeitliche Unterteilung jeder Wechselspannungshalbwelle in mindestens 30 Teile, noch bevorzugter erfolgt die zeitliche Unterteilung jeder Halbwelle in 100 Teile. Gerade mit einer Unterteilung jeder Wechselspannungshalbwelle in 100 Teil ist eine Abstufungsmöglichkeit des Zündzeitpunkts (Triac-Zündzeitpunkt) von +/-1% möglich. Jede Halbwelle der Wechselspannung wird sozusagen in 100 zeitlich gleich lange Teilstücke aufgeteilt und der schnelle PIC-Prozessor bestimmt exakt den Zündzeitpunkt innerhalb jeder oder jeder soundsovielten Halbwelle. Dieser kann in der aufsteigenden Flanke des Spannungsanstiegs einer Halbwelle liegen oder in der abfallenden Flanke nach Überschreiten des Scheitelpunktes des Spannungsverlaufs.

Je nach verwendeten Bauteilen und Lastverhäitnissen kann es bei Phasenanschnittsteuerungen zu unerwünschten Fehlzündungen von Triacs kommen (so genanntes "Über-Kopf-Zünden"). Die umfangreichen Versuche der Anmelder haben gezeigt, dass solche unerwünschten Fehlzündungen sicher vermieden werden können, wenn den Universal motoren nicht jede Halbwelle in Form eines gleichgerichteten Wechselstroms zugeführt wird, sondern durch das Vorschalten einer Diode in die Spannungszuführung zu dem Leistungsschalter (Triac oder Thyristor) nur noch jede zweite Halbwelle in Form einer pulsierenden Gleichspannung zugeführt wird. Dadurch bleibt der Triac oder Thyristor eine Halbwelle lang spannungslos, was ein sicheres Erlöschen beim Nulldurchgang und damit keinerlei Fehl-oder Rückwärts-Zündungen der Leistungssteller gewährleistet.

Umfangreiche Untersuchungen und Tests haben gezeigt, dass, zusammen mit der äußerst wirksamen Funkenlöschung am Kollektor, Regelantriebe ausgelegt werden können, mit denen durch Potentiometer oder stufenlos regelbare Analog-Signale (zum Beispiel 0-5Volt DC) über Prozessorsteuerungen Gebläsemotore quasi vom Stillstand über laminare Luftströmungen von unter 0,3 m/sec bis zu Luftströmungen jenseits von 30 m/sec stufenlos betreibbar sind. Dadurch kann ein Regelbereich von 1:100 und mehr abgedeckt werden (was beispielsweise mit einem Frequenzumrichter, aber auch mit mechanischen Regelgetrieben, kaum oder nur mit großem Aufwand möglich wäre). Im Vergleich zu diesem Regelbereich lassen sich frequenzgeregelte Drehstrommotore mit Kurzschlussläufern nur etwa von 20 Hz bis zu 120 Hz betreiben, d. h. in einem Regelbereich von etwa 1:5 bis 1:6.

Es hat sich gezeigt, dass sich kostengünstige Sauggebläse mit Reihenschlussmotoren (Universalmotoren), wie sie beispielsweise als Staubsauger-Motoren eingesetzt werden, im Druckbetrieb als Zentrifugalpumpen für Gase betreiben lassen, mit denen Gasmengen von etwa 2m³/h bis zirka 200m³/h erreicht werden können. Man kann davon ausgehen, dass diese Motoren wegen der optimalen Funkenlöschung Standzeiten von voraussichtlich 5-10 Jahren ohne nennenswerten Kollektor-Abbrand erreichen können.

Von besonderem Vorteil ist auch, dass die Steuerelektronik direkt mit den üblichen Netzspannungen, wie 110, 230 oder 400 Volt, gespeist werden kann (ohne dass dafür ein Leistungstransformator benötigt würde). Außerdem ist durch die gute Funkenlöschung ein nur geringes Störpotential gegeben (kaum Rückkopplung ins Stromnetz oder Aussendung hochfrequenter Störsignale).

Vorzugsweise wird als Löschdiode für die Funkenlöschung am Kollektor des Motors eine HEXFRED-Diode (Fast Recovery Diode) eingesetzt, die sich durch ihr schnelles Ansprechverhalten auszeichnet und dadurch für das erfindungsgemäße Gebläse vorteilhaft ist.

Die am Kollektor des Motors auftretenden Abschaltfunken werden in einem Zeitraum kleiner als 50 Nanosekunden gelöscht. Dadurch wird erreicht, dass der Abbrand an Schleifkohlen und Kollektoren auf ein Minimum reduziert bleibt. Bei Einsatz sehr schneller Dioden mit Reaktionszeiten unter 20 Nanosekunden tritt auch kaum noch messbare Erwärmung am Kollektor auf, was die Lebenserwartung der Motore nochmals verbessert.

Zur Bestimmung der Nulldurchgänge sollte eine Gleichrichterbrücke, bestehend aus Schottkydioden, verwendet werden. Derartige Schottkydioden zeichnen sich durch eine sehr niedrige Schwellenspannung aus, was für die exakte Erkennung des Nulldurchgangs der sinusförmigen Wechselspannung vorteilhaft ist.

Um eine Stabilisierung und Spannungsbegrenzung zu erreichen, wird eine Nulldurchgangserfassung über eine Leuchtdiode vorgenommen. Hierbei sollte eine Leuchtdiode mit einer Betriebsspannung von 3,5 Volt bis 4 Volt eingesetzt werden. Durch den Einsatz einer solchen Diode ist eine sehr genaue Bestimmung des Nulldurchganges während des Netzspannungsverlaufs möglich.

Bevorzugt wird der Gebläsemotor zusammen mit der Phasenanschnittsteuerung mit vorgeschalteter Diode am Leistungssteller oder mit nachgeschalteter Gleichrichterbrücke in dem Gebläse-Gasstrom angeordnet; hierdurch erfolgt eine optimale Energieausntzung, da einerseits die Abwärme von Motor und seiner Ansteuer-Elektronik dem Prozessgas zugeführt wird (Energieeinsparung) und andererseits die elektronischen Bauteile stets ausreichende Wärmeabfuhr im Gasstrom erhalten.

Besondere Verwendung findet das erfindungsgemäße Gebläse in Anlagen, bei denen ein Wärmetransport mittels Gasen erfolgt. Ein solches Anwendungsgebiet ist die Trocknung von Kunststoffgranulat, das nach der Entfeuchtung Kunststoffspritzgießmaschine oder Kunststoffextrusionsvorrichtungen zugeführt wird. Auch werden solche Gebläse vorzugsweise als Fördergebläse für die Flugförderung von Schüttgut eingesetzt. In diesen Anwendungsbereichen sind die erfindungsgemäßen Gebläse insbesondere dadurch von Vorteil, dass eine Drehzahlregelung stufenlos praktisch vom Stillstand des Motors bis zur maximalen Drehzahl, also in einem Bereich von etwa 10 U/min bis 12.000 U/min, realisiert werden kann. Damit lassen sich besonders energiesparende Trockenluftkreisläufe sowie auch eine Material schonende Flugförderung von Granulaten in Rohrleitungen mit geringem Abrieb an Fördergut und Leitungen realisieren.

Weitere Einzelheiten und Merkmale der Erfindung ergeben sich aus der nachfolgen- den Beschreibung von Ausführungsbeispielen sowie anhand der Zeichnungen und Diagramme.

Es zeigen:
- Figur 1: ein Blockschaltbild eines Gebläsemotors, dem beide gleichgerichtete Halb- wellen der Wechselspannung zugeführt werden, mit allen Komponenten für eine stufenlose Drehzahlregelung, sowie fünf Oszillogramme, die die Span- nungsverläufe an den Komponenten darstellen,
- Figur 2: ein Blockschaltbild eines Gebläsemotors, dem nur eine Halbwelle der Wech- selspannung zugeführt wird, mit allen Komponenten für eine stufenlose Drehzahlregelung, sowie vier Oszillogramme, die die Spannungsverläufe an den einzelnen Komponenten darstellen,
- Figur 3: den Spannungsverlauf in einem Wechselstromnetz mit 50 Hz,
- Figur 4: den zeitlichen Spannungsverlauf der Figur 3, mit den negativen Halbwellen zu positiven Spannungen gleichgerichtet,
- Figur 5: den Spannungsverlauf beim Nulldurchgang an dem eingesetzten PIC- Pro- zessor,
- Figur 6: den in Figur 4 gezeigten Spannungsverlauf entsprechend der Ausführung nach Figur 1, mit den dunklen Flächen unter der Spannungskurve, die bei- spielhaft für die Motorleistung stehen, und
- Figur 7: den Spannungsverlauf am Motor entsprechend der Ausführung nach Figur 2, mit den dunklen Flächen in jeder zweiten Halbwelle, die beispielhaft für die Motorleistung stehen.

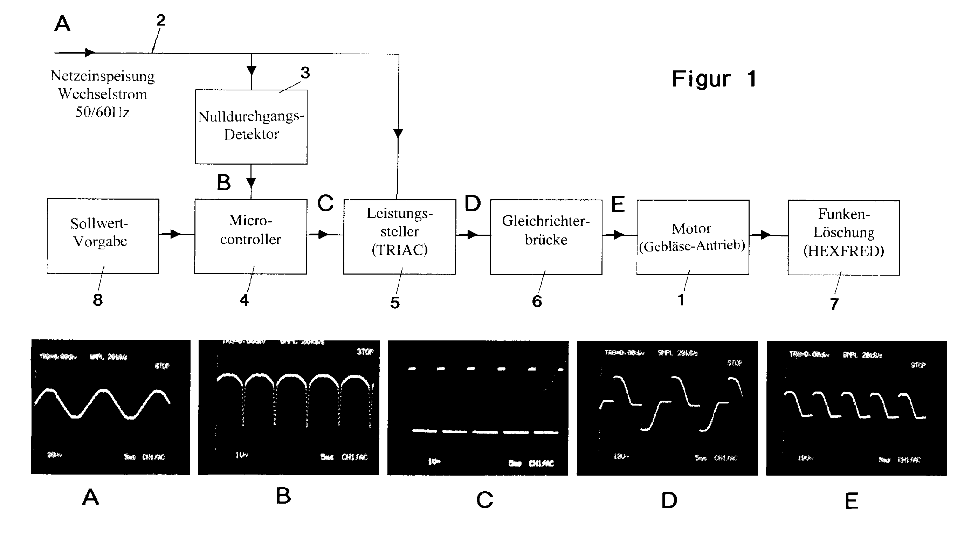

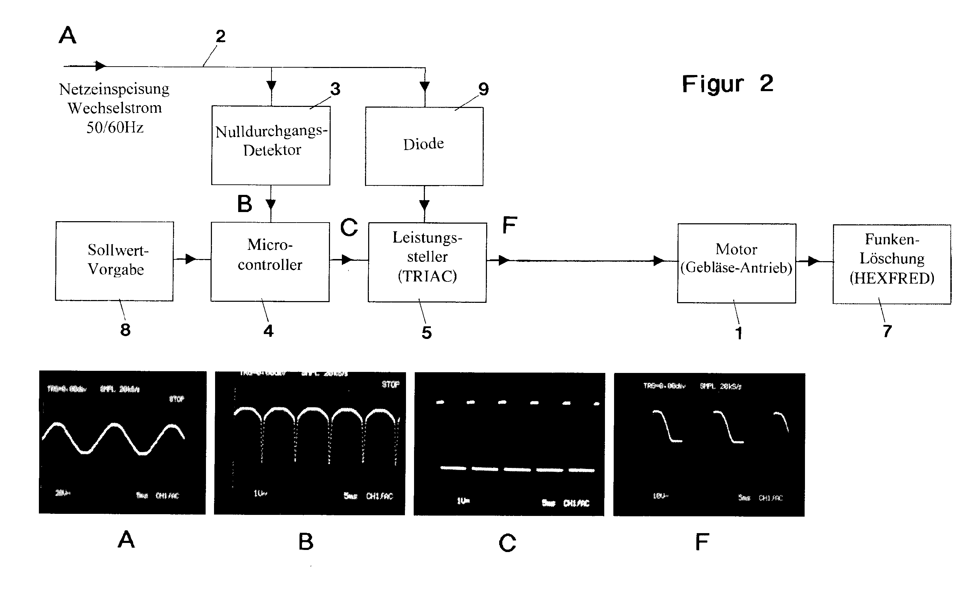

Um die Funktionsweise des Gebläses mit stufenlos regelbarer Gasmenge zu erläutern, ist in Figur 1 und Figur 2 jeweils ein Blockschaltbild dargestellt. In den Blockschaltbildern ist nur der eigentliche Motor, mit dem Bezugszeichen 1 bezeichnet, gezeigt, der mit einem entsprechenden Lüfterrad oder einer anderen Gebläseeinheit verbunden ist und diese antreibt.

Die Anordnung gemäß Figur 1 wird direkt über eine Netzeinspeisung 2 mit einer Netzspannung von zum Beispiel 230 Volt (Wechselspannung) versorgt; ein entsprechendes Oszillogramm "A" zeigt den zeitlichen Spannungsverlauf der Netzspannung. Die Netzspannung wird über einen Nulldurchgangs-Detektor 3 (im Wesentlichen bestehend aus einem Brückengleichrichter aus Schottkydioden und einer Leuchtdiode), einen Microcontroller 4 sowie einen Leistungssteller 5 (Triac) zugeführt.

Der Signalausgang des Nulldurchgangs-Detektors ist auf dem Oszillogramm "B" dargestellt und der Ausgang hinter dem Microcontroller 4 ist beispielhaft entsprechend der Sollwert-Vorgabe 8 in dem Oszillogramm "C" dargestellt.

Der Leistungssteller 5 (Phasenanschnittsteuerung) ist ausgangsseitig mit einer Gleichrichterbrücke 6 verbunden, die die ankommenden Wechselspannungs-Halbwellen oder Anschnitte von Halbwellen in Gleichspannung umwandelt und dem Motor 1 zuführt. Antiparallel liegt über dem Motoranschluss eine Hexfred-Diode 7 zur Funkenlöschung der aus den Rückspannungs-Impulsen der Motorwicklungen erzeugten Abriss-Funken an den Kollektor-Bürsten.

Der Ausgang des Leistungsstellers 5 ist auf dem Oszillogramm "D" und der Spannungsverlauf hinter der Gleichrichterbrücke 6 auf dem Oszillogramm "E" dargestellt.

Diese Anordnung, wie sie schematisch in Figur 1 in ihren einzelnen Bauelementen und Stufen dargestellt ist, arbeitet wie folgt, wobei die zeitlichen Spannungsverläufe an den einzelnen Ausgängen der Anordnung der Figur 1, neben den Oszillogrammen "A" bis "E" auch zur Erläuterung in den Figuren 2 bis 5 dargestellt sind.

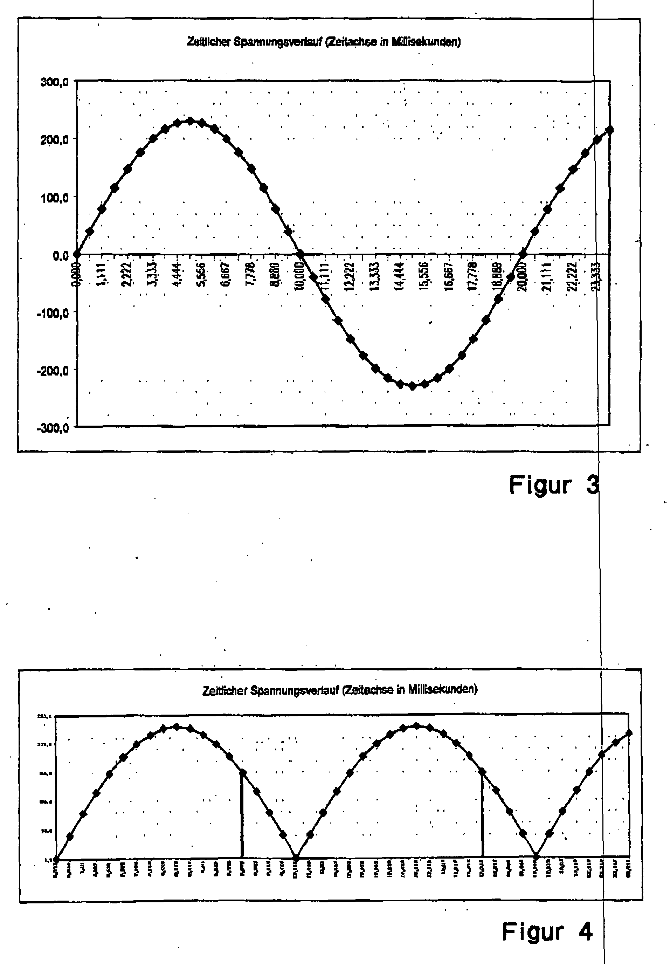

Der sinusförmige, zeitliche Spannungsverlauf der Netzspannung (Wechselstromnetz-Netzeinspeisung 2) mit 50 Hz ist in Figur 3 gezeigt (siehe auch Oszillogramm "A") Mittels der Gleichrichterbrücke 6 wird die negative Halbwelle "nach oben geklappt", so dass eine pulsierende Gleichspannung gebildet wird, deren zeitlicher Verlauf (analog zu Figur 3) in Figur 4 dargestellt ist.

Mit der Gleichspannung, wie sie die Figur 4 zeigt (siehe auch Oszillogramm "E"), wird der Motor 1 betrieben. Durch diesen Gleichspannungsbetrieb ist es möglich, entstehende Funken mittels schneller Dioden (FRED = fast recovery diode) am Anker des Motors 1 kurz zu schließen (Funkenlöschung 7). Diese Funken stammen aus der Induktivität der Wicklungen des Motors 1, wobei die Induktionsspannung eine entgegengesetzte Polarität zur Speisespannung hat. Mit Varistoren oder Surpressordioden und im Wechselstrombetrieb ist diese Art der Funkenlöschung nicht möglich, da der untere Wert der induzierten Spannung dann nur bis auf Betriebsspannungsniveau und nicht auf 0 gebracht werden kann. Außerdem werden mit FRED-Dioden Schaltzeiten von 18 nS erreicht, die z.B. bei Varistoren nicht möglich sind.

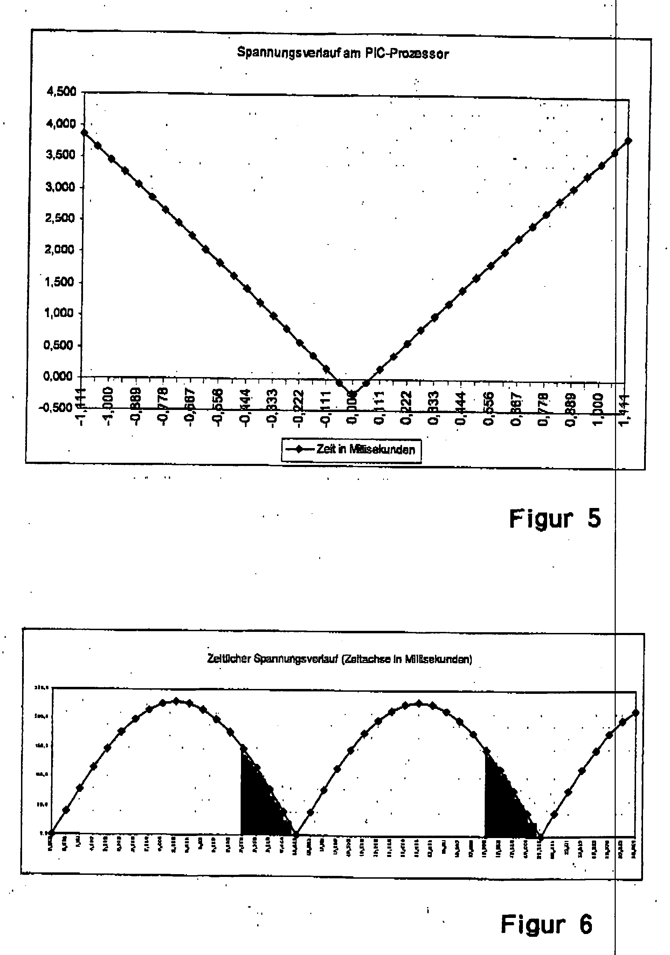

Mit einer weiteren Gleichrichterbrücke im Nulldurchgangs-Detektor 3, die mit Schottkydioden aufgebaut ist, wird der "Nulldurchgang" der Spannung auf ca. 100µs genau bestimmt (Nulldurchgangs-Detektor 3 der Figur 1 und Figur 2), was anhand des Spannungsverlaufs nahe dem Nullpunkt zu sehen ist (siehe Figur 5).

Im Microcontroller 4 (PIC-Prozessor) wird eine Interruptroutine alle 100µs aufgerufen. Bei einer Netzfrequenz von 50 Hz kann so eine Halbwelle der Wechselspannung (=10 Millisekunden) in 100 Teile aufgeteilt werden und der Zündzeitpunkt für jede Halbwelle kann exakt reproduzierbar vom Microcontroller bestimmt werden. Die Leistung des Motors wird über eine Phasenanschnittsteuerung gesteuert, wobei der Steuerwert über einen Analogeingang vorgegeben wird (Sollwert-Vorgabe 8 in Figur 1 und Figur 2).

Null bis 5 Volt entsprechen 0 bis 100 % der Halbwelle in Figur 4. Der Ausgangstriac der Motorsteuerung (Leistungssteller 5 In Figur 1 und Figur 2) wird gezündet, wenn der errechnete Zeitpunkt erreicht ist, und erlischt im Nulldurchgang (siehe Figur 6).

Es ist einleuchtend, dass für den Betrieb mit einer Netzfrequenz von 60 Hz eine andere Zeitabstimmung erforderlich ist.

Die Frequenz von 50 oder 60Hz könnte mittels eines Umschalters dem Microcontroller 4 vorgegeben werden. Auch eine automatische Erkennung der Netzfrequenz durch den Microcontroller ist denkbar.

Mit der vorstehend beschriebenen Arbeitsweise ist eine sehr präzise Steuerung der Motorleistung und damit der Motordrehzahl möglich.

Da die erforderlichen schaltungstechnischen Einheiten (5, 6 oder 9 und 7) von geringer Baugröße sind, ist es möglich, diese zusammen mit dem Gebläsemotor unmittelbar in dem Gebläse-Gasstrom, der mit dem Motor 1 erzeugt wird, anzuordnen, so dass die durch die Bauteile erzeugte Wärme, d. h. die Abwärme von Motor und seiner Ansteuer-Elektronik, nicht an die Umwelt abgegeben, sondern zum Zweck der Energieersparnis dem Prozessgas zugeführt werden kann.

Die Anordnung gemäß Figur 2 ist bezüglich der Bauteile Nullspannungs-Detektor 3, Microcontroller 4 sowie Sollwert-Vorgabe 8 identisch zu den Erklärungen zu Figur 1.

Der Unterschied liegt auf der Leistungsseite: Bei der Anordnung gemäß Figur 2 wird die Netzspannung 2 über eine Diode 9 dem Leistungssteller 5 zugeführt. Das bedeutet, dass der Leistungssteller 5 nur jede zweite Halbwelle an den Motor 1 weitergeben kann

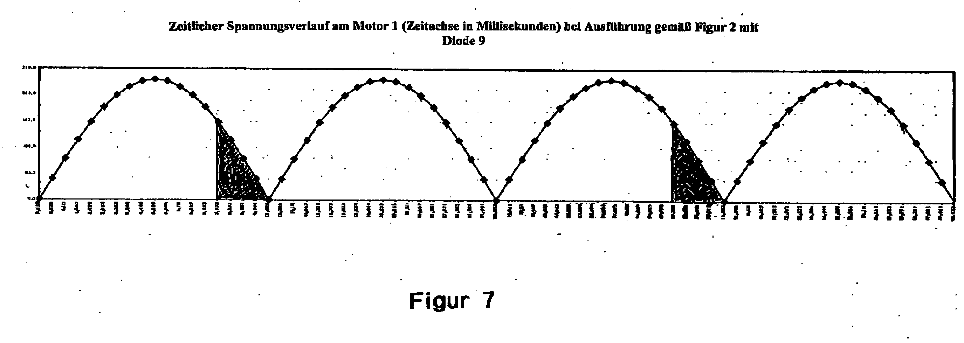

Der Verlauf der am Motor 1 anliegenden Spannung ist als Beispiel in Figur 7 dargestellt. Auch bei der Anordnung gemäß Figur 2 liegt über dem Motoranschluss bzw. den Schleifbürsten des Motorankers eine HEXFRED-Diode 7 zur Funkenlöschung.

Anstelle der Anordnung eines Triacs mit vorgeschalteter Diode könnte auch ein Thyristor mit geeigneten Eigenschaften als Leistungssteller (5) eingesetzt werden.

Die Anordnung gemäß Figur 2 gibt einerseits weniger elektrische Leistung an den Motor 1 weiter, hat aber andererseits den großen Vorteil, dass es wegen der Nullspannungs-Pause, wie in Figur 7 dargestellt, nicht zu unkontrollierbaren und unerwünschten Fehlzündungen des Leistungsstellers kommen kann.

Reduzierte Motorleistung bei der Anordnung gemäß Fig. 2 könnte durch das Anlegen entsprechend höherer Betriebsspannungen oder durch veränderte Dimensionierung von Motor- und Ankerwicklung leicht kompensiert werden.

## Patentansprüche

1. Gebläse mit stufenlos regelbarer Gasmenge, mit einem Antriebsmotor in der Bauweise eines Reihenschlussmotors (Universalmotors), der über eine Phaseanschnittsteuerung (Leistungssteller) in der Drehzahl regelbar ist, wobei der Motor über ein Wechselstromnetz mit 50 Hz oder 60 Hz Frequenz betrieben wird,
**dadurch gekennzeichnet,**
**dass** ein Microcontroller (4) verwendet wird, der die Halbwellen der Wechselspannung (2) zeitlich in gleiche Abschnitte unterteilt, die Nulldurchgänge der Polaritätswechsel der Wechselspannung (2) erfasst und den jeweiligen Zündzeitpunkt der Phasenanschnittsteuerung (5) für jede Halbwelle errechnet,
**dass** das Ausgangssignal mit einer Diode (9) vor der Phasenanschnittsteuerung (5) oder mit einer Gleichrichterbrücke (6) hinter der Phasenanschnittsteuerung (5) so umgeformt wird, dass kein Polaritätswechsel der Spannung mehr auftritt,
**dass** das gleichgerichtete Ausgangssignal der Phasenanschnittsteuerung (5) dem Universalmotor (1) zugeführt wird
und **dass** die an den Schleifbürsten des Motor-Kollektors auftretenden Abschaltfunken aus der Gegeninduktivität des Motor-Ankers und der Motor-wicklung mittels einer Diode (7) mit Reaktionszeiten im Nanosekundenbereich gelöscht werden.

2. Gebläse nach Anspruch 1, **dadurch gekennzeichnet, dass** die zeitliche Unterteilung jeder Wechselspannungshalbwelle in mehr als 30 Teile erfolgt.

3. Gebläse nach Anspruch 1, **dadurch gekennzeichnet, dass** die zeitliche Unterteilung jeder Halbwelle in 100 Teile erfolgt.

4. Gebläse nach Anspruch 1 bis 3, **dadurch gekennzeichnet, dass** als Löschdiode (7) eine HEXFRED-Diode (Fast Recovery Diode) eingesetzt ist.

5. Gebläse nach einem der Ansprüche 1 bis 4, **dadurch gekennzeichnet, dass** die am Kollektor des Motors (1) auftretenden Abschaltfunken in einem Zeitraum kleiner als 50 Nanosekunden gelöscht werden.

6. Gebläse nach Anspruch 5, **dadurch gekennzeichnet, dass** die Abschaltfunken am Kollektor in einem Zeitraum kleiner als 20 Nanosekunden gelöscht werden.

7. Gebläse nach einem der Ansprüche 1 bis 6, **dadurch gekennzeichnet, dass** die Erfassung der Nulldurchgänge durch den Nulldurchgangsdetektor (3) über eine Gleichrichterbrücke, bestehend aus Schottkydioden, erfolgt.

8. Gebläse nach Anspruch 7, **dadurch gekennzeichnet, dass** eine Stabilisierung und Spannungsbegrenzung der Nulldurchgangserfassung (3) über eine Leuchtdiode erfolgt.

9. Gebläse nach Anspruch 8, **dadurch gekennzeichnet, dass** eine Leuchtdiode mit einer Betriebsspannung von 3,5 Volt bis 4 Volt eingesetzt wird.

10. Gebläse nach einem der Ansprüche 1 bis 9, **dadurch gekennzeichnet, dass** der Gebläsemotor (1) zusammen mit dem Leistungssteller (5) und mit der Diode (9) oder dem Gleichrichter (6) in dem Gebläse-Gasstrom angeordnet ist.

11. Verwendung des Gebläses nach einem der Ansprüche 1 bis 10 für Anwendungen des Wärmetransports mittels Gasen.

12. Verwendung des Gebläses nach einem der Ansprüche 1 bis 10 für die Trocknung von Kunststoffgranulat.

13. Verwendung des Gebläses nach einem der Ansprüche 1 bis 10 als Fördergebläse für Flugförderung von Schüttgut.
